# EUROPEAN PATENT SPECIFICATION

(11) **EP 2 346 312 B1**
(45) Date of publication and mention of the grant of the patent: **13.11.2013**
(21) Application number: 09785468.1
(22) Date of filing: 11.08.2009
(51) Int. Cl.: A01B 29/04

(54) **LAND MANAGEMENT**
BODENBEWIRTSCHAFTUNG
GESTION DE SURFACE

(30) Priority: 14.08.2008 GB 0814892
(43) Date of publication of application: 27.07.2011
(73) Proprietor: Aquagronomy Limited, Thirsk North Yorkshire YO7 3QX (GB)
(72) Inventor: CREYKE, Charles, Henry, Thirsk North Yorkshire YO7 3QX (GB)
(74) Representative: Sanderson, Nigel Paul
(86) International application number: PCT/GB2009/051000
(87) International publication number: WO 2010/018400

(56) References cited:
- WO-A-94/12010
- US-A- 1 858 948
- US-A- 2 558 241
- US-A- 2 587 463
- US-A- 5 690 179
- US-B1- 7 562 517

## Description

The present invention relates to a method and apparatus for forming a plurality of impressions in a target surface. In particular, but not exclusively, the present invention relates to a method and apparatus which can aid in managing soil irrigation by providing impressions in a region of land which will catch and hold rainfall or irrigation applied water to reduce or wholly prevent water run-off from the land.

Agricultural production techniques typically involve the ploughing, cultivating, harrowing, sowing, rolling, inversion, stirring and consolidating/compacting of land. These activities are undertaken with the intention of obtaining maximum or high crop yield at minimum or low cost per acre of cultivatable land. However, such practices have created problems. These problems include soil surface erosion and difficulties in ensuring uniform soil irrigation.

Soil surface water run-off has been known to be a major cause of soil erosion for centuries. It is known that soil surface water run-off from tilled soils makes a significant contribution to the pollution of water courses, inadequate recharge of aquifers, increasing flood risk and reduction of water available to grow crops. It is also known that soil surface water run-off can be initiated when an amount of rainfall/irrigation applied water is as low as 5mm per hour on capping and/or compacted soils. This can be the result of particular soil types or compaction-causing tillage practices.

Minimisation of soil surface water run-off and potential erosion has traditionally been achieved by a number of techniques. For example, having a ground cover/living canopy over the soil to absorb the destructive energy of falling droplets, ploughing which inherently creates a randomly rough soil surface to increase the soil surface water storage and establishing winter cereals in a randomly rough seed bed to increase the soil surface water storage.

However profitable crops/crop growing practices which are required to satisfy economic forces have often been found to be incompatible with such traditional methods of soil surface water run-off control. The incompatibility of traditional methods has generated numerous means and methods of remedial run-off control including mechanical devices that create a controlled soil surface roughness and controlled soil surface inverse roughness. Also the creation and use of pathways such as tramlines or controlled traffic lines that enable wheeled field operations to use similar lines and the application of soil stabilisers to increase water infiltration have been utilised.

Known mechanical means of carrying out the practice of creating controlled soil surface roughness and controlled soil surface inverse roughness can be differentiated by their different modes of operation and can increase soil surface water storage by up to 1,000 percent. These known means include (a) controlled soil surface roughness techniques such as spading or scraping and (b) controlled soil surface inverse roughness techniques such as imprinting or indenting or (c) the application of soil stabilisers.

The suitability and successful use of a mechanical soil surface roughness creating device to control soil surface water run-off depends on satisfying some or all of the following requirements.
(a) Creating adequate soil surface water storage for the anticipated rainfall/irrigation.
(b) Maintaining/increasing the soil infiltrability.
(c) Creating reservoirs consistently and accurately (self-cleaning).
(d) Creating a residual soil surface that is hazard free to sequential operations.
(e) Being compatible with crop growing areas:-
   (i) combinable crops (level soil, narrow rows)
   (ii) row crops (level soil, wide rows)
   (iii) bed crops (level soil wide rows and narrow rows)
(f) Being compatible with non-crop growing areas:-
   (i) combinable crops (traffic/tramlines)
   (ii) row crops (traffic/tramlines)
   (iii) ridge/bed crops (furrows, traffic/tramlines)
(g) Being capable of penetrating the soil to be treated.
(h) Creating reservoirs that suffer minimum degradation.

An appraisal of the analysis of these factors shows that:
(a) In crop growing areas:
   (i) spading, scraping and imprinting, do not self-clean, leave a residual soil surface that is hazardous to sequential operations, and are not compatible with crop growing areas (row widths).
   (ii) indentation (practices by the Aqueel™ and Aqueel™ CC) is compatible with crop growing areas and does not present a hazard to sequential operations.
(b) In non-crop growing areas:
   (i) spading and imprinting do not self-clean and leave a residual soil surface that is hazardous to sequential operations.
   (ii) scraping does not self-clean, leaves a residual soil surface that is hazardous to sequential operations and only operates in furrows.
   (iii) indentation (practices by the Aqueel™ and Aqueel™ CC) is unable to overcome the resistance to penetration of the soil to be treated when the soil to be treated is harder than the material used for construction.

The soil types/conditions and crop growing practices that cannot be treated successfully by known mechanical means of soil surface roughness creation can be identified as:-
(a) soil types/conditions:-
   (i) shallow soil
   (ii) stony soil
   (iii) hard soil
(b) crop growing practices:-
   (i) traffic/tramlines in combinable crops
   (ii) furrows in bed grown crops
   (iii) furrows in ridge grown crops

The successful operation and use of the Aqueel™ and Aqueel™ CC in crop growing areas can be attributed to:-
(a) The creation of a residual soil surface that is hazard free to sequential operations, by creating a large number of smaller reservoirs that effectively create a level surface to the commonly used wheel diameters of equipment used for sequential operations. The residual soil surface being a controlled inversely rough soil surface.
(b) The creation of consistently accurate reservoirs by efficient self-cleaning of the soil contacting surfaces, by using resilient materials that are soft, elastomeric and/or flexible.
(c) The combined, smaller reservoir size and accuracy of indentation allows tailoring to crop sowing/growing patterns/practices.
(d) Minimum down force requirement that indents the soil surface of loose/medium-loose soils, allows known infiltration rate increases in the reservoirs.
(e) The capability of increasing soil surface water storage in soils with a low tilth index by up to 1000 percent.

The successful self-cleaning of soil contacting surfaces of a rotary soil surface controlled inverse roughness creating device is disclosed in WO 94/12010. This has proved useful for the accurate creation of reservoirs compatible with crop growing areas. However, whilst the resilient material used for such a device has appropriate properties such as softness, elasticity and flexibility to provide self-cleaning and penetration in certain types of soils (for example soft and medium-soft soils) the device is not universally applicable and in particular is not usable in hard soil regions or regions of soft or medium-soft soil land where such soils are compacted.

Tramlines in combinable crops, row crops and furrows in bed-ridge crops are classified as non-crop growing areas. These are deliberately designated areas established annually and can be used for post tillage operations. Such pathways are now an essential requirement of profitable crop growing practices which enable accurate application of fertiliser, pesticide and water irrigation to be carried out. Controlled traffic lines can also be classified as non-crop growing areas and these pathways are also deliberately designated areas established permanently or semi-permanently and used for all field operations. Recent trials and large scale field practice has shown yield increases of 10 percent, fuel usage down by 30 percent and increases in water infiltrability and storage in the crop growing areas when use is made of such traffic lines.

The inevitable repeated passes of crop operations along the same non-crop growing pathways such as tramlines or controlled traffic lines causes severe compaction of the soil and can lead to concavity of the soil surface and rutting in wet conditions. The adjacent crop growing area being traffic free and consequently compaction free encourages maximum root and crop growth which, when treated with the Aqueel™ device as shown in WO 94/12010, is resistant to soil surface water run-off. In contrast the non-crop growing pathways are severely compacted and may have a concave surface that is impervious to water resulting in ready-made water run-off channels.

It has been established in the UK that 70 percent of soil erosion incidents are now initiated by such tramlines/traffic lines in combinable crops and furrows in bed-ridge-grown crops which can occupy up to 5 percent of a field area of combinable crops, up to 20 percent of a field area growing bed crops and up to 33 percent of a field area growing ridge crops.

Water infiltration into the whole of the non-crop growing area occupied by pathways/furrows is neither possible nor desirable if a dry, high load bearing soil condition is to be established and maintained and which enables repeated operational passes to be carried out without soil collapse. Where stone-clod separation and windrowing by the well-known burial method is practiced, disturbance of buried stones/clods to increase water infiltration defeats the object of placing the stones/clods clear of a harvester intake share.

The control of water run-off and/or the establishment and maintenance of load-bearing pathways via traffic, tramlines, furrows has now been established as a limitation to the environmental and economic potential of their use.

US 5690179 A discusses a device that aerates lawn or soil using a unique triangular shaped tine or spike.

It is an aim of the present invention to at least partly mitigate the above-mentioned problem.

It is an aim of certain embodiments of the present invention to provide a method and apparatus to help manage soil irrigation particularly, but not exclusively, in regions of land such as pathways where prior known irrigation management techniques have been inapplicable.

It is an aim of certain embodiments of the present invention to provide a vehicle or equipment attachable to a vehicle which establishes or re-establishes desired pathways such as tramlines and/or controlled traffic lines and/or furrows but which improves water retention in such regions and/or close to those regions.

It is an aim of certain embodiments of the present invention to provide a method and apparatus for generating impressions in a target surface such as the soil surface of cultivatable land whereby the impressions made act as reservoirs to hold rainwater to prevent run-off and whereby the equipment used can be adjusted according to a soil type where the equipment is to be used.

It is an aim of certain embodiments of the present invention to provide a "universal" technique for generating water holding reservoirs in land. The apparatus used should be usable on all types of land including hard and compacted as well as soft ground areas.

It is an aim of certain embodiments of the present invention to provide a method and apparatus which can establish or re-establish a convex pathway or strip in a region of land.

According to a first aspect of the present invention there is provided a method of forming a plurality of impressions in a target surface, comprising the steps of:
urging a roller element arranged to rotate about a longitudinal axis, in a direction of advancement over a target surface, an angle between said direction of advancement and said longitudinal axis being between 89° and 30°; and
as the roller element rotates, forming successive impressions in the target surface via at least one tooth element extending outwardly at a respective region of an outer surface of the roller element, each said impressions being formed via a combination of sliding and urging each tooth element against the target surface as the roller element rotates.

Aptly the impressions are formed as a controlled soil surface inverse roughness with surface contacting surfaces of a device used to form the impressions being self cleaning via a slip and scour operation.

Aptly penetration and durability without deformation is achieved by constructing at least the surface contacting regions of the device with a material that is harder than the surface to be treated.

Aptly facilitation of slip and scour of the target surface is achieved by augmenting inherent movement differentials between a tool and the contact surface with an additional movement differential between the tool and the surface created by orientating the axis of rotation of a roller element by 1 to 60° to the transverse of the direction of travel.

Aptly a roller element can be integrally made/moulded or detachably mounted with paddles/blades/formers, acting as teeth which indent a target surface to create impressions as troughs/depressions/reservoirs, formed about the periphery of a wheel/roller. The paddle/blade/formers are orientated at an angle of 1 to 90° to the direction of rotation of the roller element.

According to a second aspect of the present invention there is provided apparatus for providing a plurality of impressions in a target surface, comprising:
a roller element arranged to rotate about a longitudinal axis and comprising a plurality of tooth elements disposed circumferentially around the outer surface of the roller element each extending outwardly at a respective region of an outer surface of the roller element; and
a roller element support that supports the roller element and allows rotation of the roller element with respect to the support; wherein
the roller element is movable in a direction of advancement, the longitudinal axis of the roller element being disposed at an angle of between 89° and 30° to the direction of advancement, characterised in that
each tooth element comprises a body portion being substantially parallelogram shaped proximate to the contact surface and blending into a ridge region distal said contact surface, or
each tooth element comprises a body portion having a substantially V-shaped nose portion, a substantially V-shaped tail portion and a substantially rectangular body portion between the tail portion and nose portion, or
each tooth element comprises a body portion having a substantially arcuate nose portion and a substantially V-shaped tail portion extending from the nose portion, the nose portion being disposed to engage the target surface prior to the tail portion as the roller element rotates.

Aptly the impressions are formed as a controlled soil surface inverse roughness with surface contacting surfaces of a device used to form the impressions being self cleaning via a slip and scour operation.

Aptly penetration and durability without deformation is achieved by constructing at least the surface contacting regions of the device with a material that is harder than the surface to be treated.

Aptly facilitation of slip and scour of the target surface is achieved by augmenting inherent movement differentials between a tool and the contact surface with an additional movement differential between the tool and the surface created by orientating the axis of rotation of a roller element by 1 to 60° to the transverse of the direction of travel.

Aptly a roller element can be integrally made/moulded or detachably mounted with paddles/blades/formers, acting as teeth which indent a target surface to create impressions as troughs/depressions/reservoirs, formed about the periphery of a wheel/roller. The paddle/blade/formers are orientated at an angle of 1 to 90° to the direction of rotation of the roller element.

According to a third aspect of the invention there is provided a land and/or roadworthy vehicle useable for land management, comprising:
drive means for moving the vehicle over land and/or along a road; and
the apparatus according to the second aspect of the invention.

According to a fourth aspect of the invention there is provided an apparatus for providing a plurality of impressions in a target surface, comprising:
a first apparatus according to the second aspect of the invention, being a first roller element arranged to rotate about a respective first longitudinal axis and a first roller element support that supports the roller element and allows rotation of the first roller element with respect to the first support; and
a second apparatus according to the second aspect of the invention, being a second roller element arranged to rotate about a respective further longitudinal axis and a second roller element support that supports the second roller element and allows rotation of the second roller element with respect to the second roller element support.

Aptly the impressions are formed as a controlled soil surface inverse roughness with surface contacting surfaces of a device used to form the impression being self cleaning via a slip and scour operation.

Aptly penetration and durability without deformation is achieved by constructing at least the surface contacting regions of the device with a material that is harder than the surface to be treated.

Aptly facilitation of slip and scour of the target surface is achieved by augmenting inherent movement differentials between a tool and the contact surface with an additional movement differential between the tool and the surface created by orientating the axis of rotation of a roller element by 1 to 60° to the transverse of the direction of travel.

Aptly a roller element can be integrally made/moulded or detachably mounted with paddles/blades/formers, acting as teeth which indent a target surface to create impressions as troughs/depressions/reservoirs, formed about the periphery of a wheel/roller. The paddle/blade/formers are orientated at an angle of 1 to 90° to the direction of rotation of the roller element.

Certain embodiments of the present invention provide a method of forming a plurality of impressions in a target surface so that the so-formed impressions will hold rainwater and/or irrigation applied water when falling on a region of land in which the impressions are made. This prevents run-off of the rainwater or irrigation applied water from that region of land.

Certain embodiments of the present invention provide a method and apparatus for forming impressions which can be utilised in compacted regions of soil or in hard soil areas as well as in softer soil regions.

Certain embodiments of the present invention provide a method and apparatus for forming impressions in a target surface regardless of the hardness or softness of the material forming the target surface.

Certain embodiments of the present invention provide a method of forming impressions so as to reduce or prevent water run-off and simultaneously re-establish or establish convex pathways such as tramlines or controlled traffic lines.

Certain embodiments of the present invention provide a method of forming impressions so as to reduce or prevent water run-off and simultaneously re-establish or establish raised strips in a region of land.

Certain embodiments of the present invention provide for self cleaning of soil contacting surfaces of a rotary soil manipulation device that creates controlled soil surface inverse roughness by facilitating slip and scour without compromising deformation or penetration.

Advantageously a movement differential, created by orientating an axis of rotation of a roller element, combined with orientation of at least one tooth, such as a paddle/blade/former, enables teeth to move through the soil lengthways creating slip and scour of target surface contacting surfaces whilst at the same time indenting the target surface to create impressions such as troughs or depressions which can act as rainwater reservoirs.

Optionally adjustment of the orientation of an axis of rotation of a roller element, such as a wheel or drum by dipping or tilting, can respectively increase or decrease the slip experienced along the length of teeth extending from the roller element inversely to the slip experienced in a direction of travel. This control of the balance between the two slip directions is beneficial when there is a requirement to accumulate enough soil to create a barrier/bund through a scraping action in a direction of travel (e.g. when stone/clod separation is practiced using the burial method, which results in minimum soil cover over the stones/clods).

Optionally adjustment of the orientation of the axis of rotation of the roller element can also increase or decrease soil pressure on a leading side of teeth on the roller element. This increase or decrease in soil pressure is inverse to the soil pressure experienced on a trailing side of the teeth. This is beneficial when optimising slip and scour according to soil type and/or soil condition.

Optionally for a chosen angle of orientation of the teeth, adjustment of the orientation of an axis of rotation can increase or decrease the length of impressions, such as troughs/depressions which form the reservoirs. This is beneficial to accommodate both level and sloping ground by creating longer troughs or depressions on level ground and shorter troughs or depressions on sloping ground which maximises the usable water storage of the impressions.

Certain embodiments of the present invention utilise a material that is harder than the material of the target surface being treated and this fact, together with the adjustability of the roller elements and teeth with or without an adjustment of an angle between a direction of travel and an axis of rotation, can be beneficially incorporated into numerous aspects of soil management practice including known means and methods. With or without particular additional features improved soil management practices can be carried out in either wheel or roller mode where it is beneficial to create soil surface impressions.

Embodiments of the present invention will now be described hereinafter, by way of example only, with reference to the accompanying drawings in which:
Figure 1 illustrates a roller making impressions;
Figure 2 illustrates the roller of Figure 1 advancing over a target surface;
Figure 3 illustrates a roller making impressions and fissures:
Figure 4 illustrates the roller of Figure 3 advancing over a target surface;
Figure 5 illustrates a roller making impressions and establishing or re-establishing a convex pathway;
Figure 6 illustrates the roller shown in Figure 5 as it advances over a target surface;
Figure 7 illustrates a roller generating two rows of impressions with locations where seeds may be planted;
Figure 8 illustrates the roller as shown in Figure 7 as it advances over a target surface;
Figure 9 illustrates two rollers supported in a tilted fashion;
Figure 10 illustrates another view of Figure 9;
Figure 11 illustrates a support for supporting two rollers in a tilted configuration;
Figure 12 illustrates a support for supporting two rollers in a non-tilted configuration;
Figure 13 illustrates how rollers can establish or re-establish a convex pathway;
Figure 14 illustrates how two rollers can establish or re-establish a convex pathway;
Figure 15 illustrates how multiple rollers can be simultaneously used to generate rows of impressions including convex pathways at desired locations;
Figure 16 illustrates optional tooth shapes;
Figure 17 illustrates water run off into impressions.

In the drawings like reference numerals refer to like parts.

Throughout this specification reference is made to a pathway. It is to be understood that the term "pathway" is to be broadly construed and includes a tramline used in crop cultivation as a non-crop growing area (and which are established annually) or controlled traffic lines which are also classified as non-crop growing areas but which may be established permanently or semi-permanently and have well-established locations. A pathway also may be a furrow in between beds/ridges where crops are not grown.

Throughout this specification reference is also made to scouring and sliding action. A well-known aspect of sliding action of soil is scouring of a tool whilst it is being operated to pass at least partially through the soil. Scouring is defined as the shedding or self-cleaning of the soil from the tool through a sliding action. Scouring is a relative term rather than an exact term.

Throughout this specification the term roller is referred to. It is to be understood that this term is to be broadly construed as any element which rolls such as a wheel, drum, cylinder, etc. The rollers may have open or closed ends and may be driven by being supported and propelled by another vehicle.

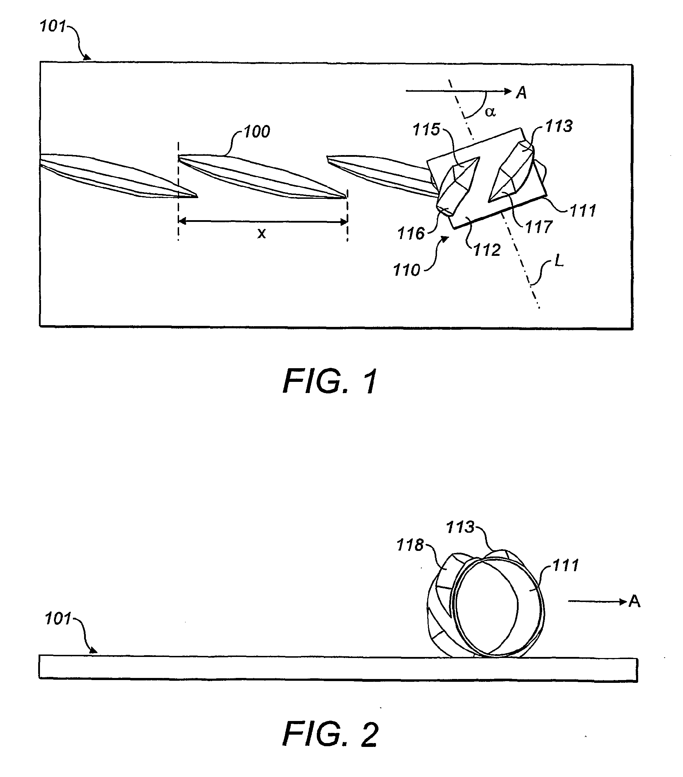

Figure 1 illustrates a method of forming a plurality of impressions 100 in a target surface 101. The target surface can be the upper surface and immediate underlying region of land involved for ploughing, cultivating, harrowing, sowing, rolling, inversion, stirring and compacting. Typically the land will be soil which may be shallow, stony, hard or any other type of soil condition. The upper surface of the target surface may be rough or smooth.

As illustrated in Figure 1 a roller 110 includes a generally cylindrical body 111 having a substantially cylindrical outer surface 112 from which multiple teeth 113 extend. A longitudinal axis L about which the roller 110 rotates is offset from a direction of advancement A via a predetermined angle α. The angle between the direction of advancement and the longitudinal axis is between 89° and 30°. Preferably the angle is between 35 and 55°. Optionally the angle is between 30 and 60°.

It will be appreciated that as with the further described embodiments the roller may be supported in one of two configurations at this angle with respect to the direction of advancement. Either with a longitudinal axis of a leading end of the roller making an angle α with the direction of advancement or a longitudinal axis of a trailing end of the roller making the angle α with the direction of advancement.

The roller is supported (not shown in Figure 1) by a support which is driven in the direction of advancement. As the roller is moved in the direction of advancement A the roller is caused to rotate due to the friction between the contact surface 112 and teeth 113 of the roller and the surface 101 of the land. As the roller advances the soil contacting surfaces of the roller create controlled soil surface inverse roughness by facilitating a slip and scour motion. This leads to self-cleaning of the teeth and outer surface of the roller without compromising deformation or penetration of the target surface.

The roller may be formed from a material such as stainless steel, cast iron, plastic, plastic composite or any such material that is hard, durable and has a reasonably low coefficient of friction and the teeth may be formed from a common or different material. The material is typically harder than the soil to be treated although materials being softer than the target surface may optionally be utilised.

The facilitation of slip and scour of the soil contacting surfaces is achieved by augmenting inherent movement differentials between the tool and the soil with an additional movement differential between the tool and the soil created by orientating an axis of rotation of the roller by 1° to 60° to a direction transverse to a direction of travel of the roller.

The teeth illustrated in Figure 1 are integrally formed with the roller element. It will be appreciated that optionally teeth may be detachably mounted to the roller body.

Figure 2 illustrates a further view of the roller shown in Figure 1. As illustrated, the roller 110 includes a cylindrical body 111 from which multiple teeth 113 extend. As the roller moves in the direction of advancement A (from left to right in Figure 2) the teeth leave indentations in the soil surface. These impressions create troughs which act as reservoirs for rainwater or irrigation water which subsequently falls on the target surface. Creating reservoirs in this way traps water to prevent water run-off from the target surface. It will be appreciated that different soils have specific rates of infiltration but for any soil type there will be a rainfall rate over which the rate of infiltration is not sufficient to cope with the incoming volume of water. Excess water will thus run-off and can result in silt and chemical erosion. It will be appreciated that embodiments of the present invention provide a method and apparatus for forming a plurality of impressions in the target surface which prevent such run off and hence erosion.

The teeth 113 which extend outwardly from the outer surface of the roller have, in plan view, an arcuate nose 115 with a rectangular body 116 and V-shaped tail portion 117. The nose 115 is arranged to engage the target surface as the roller rotates prior to the body and tail portion. As illustrated Figures 1 and 2 proximate to the outer surface of the roller the teeth extend outwardly from the outer surface of the roller over a relatively broad width which then narrows to a ridge 118 running through the nose, body and tail.

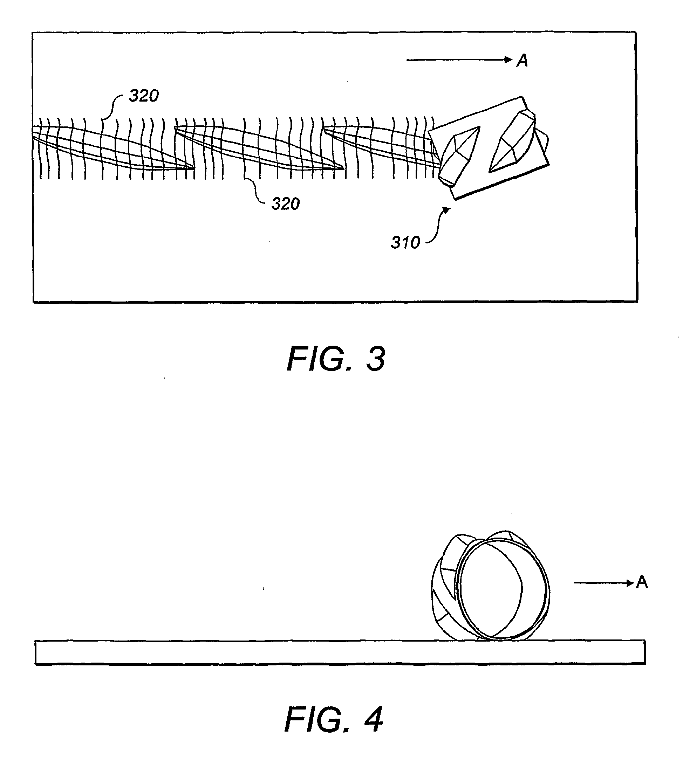

Figure 3 illustrates how an alternative embodiment of the present invention can utilise a roller 310 driven in a direction of advancement to generate impressions 100 as well as fissures 320 in the target surface. Whether or not fissures 320 are created will be determined by the consistency of the material at the target surface, speed of rotation, speed of advancement A and material of the teeth and roller. The fissures, if created, help break up the target surface which also aids in water penetration as well as helping oxygenate the soil to later aid plant life growth.

Figure 4 illustrates another view of the roller 310 shown in Figure 3 as it advances (from left to right in Figure 4) in a direction of advancement A.

As illustrated in Figures 1 to 4 the teeth preferably include sharp points and ridges which help soil penetration. Also the sharp edges result in a low coefficient of friction profile as the teeth are removed out of contact with the target surface. This helps prevent material adhering to the roller. It will be appreciated that in certain soil types the sharp edges will not be required as the soil itself may be easy to penetrate and may be of a type which is relatively reluctant to adhere to the roller. Optionally the material of the roller including the teeth may be selected to enhance the low adherence characteristics, for example, by coating or manufacturing the whole or parts of the outer surface of the roller and teeth with a low friction material.

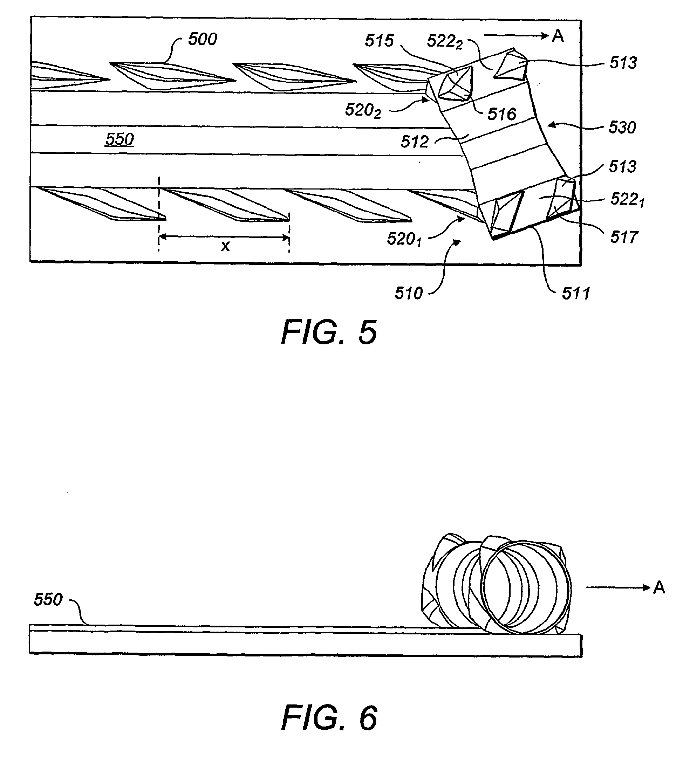

Figure 5 illustrates an alternative embodiment of the present invention in which a roller 510 can be supported and driven in a direction of an advancement A. A longitudinal axis about which the roller rotates is offset from the direction of advancement by a predetermined angle α as previously described. The body 511 of the roller includes an outer surface 512 and includes two rows of teeth 513. Each tooth has an arcuate nose 515, a central body region 516 and a V-shaped tail 517. A first row 520₁ of teeth 513 is located at a first end of the roller whilst a further row 520₂ of teeth 513 is located at a remaining end of the roller. The outer surface 512 of the roller includes substantially cylindrical regions 522₁, 522₂, where the teeth are located and then a centrally concave region 530. The concave central region 530 includes a substantially cylindrical central region 531 and a first and second outwardly tapered region extending from the central region to the cylindrical first and second regions respectively at the ends of the roller.

Figure 6 illustrates another view of the roller shown in Figure 5 as it advances in a direction of advancement A. As shown in Figures 5 and 6 the concave central region 530 of the roller results in a convex pathway 550 being produced in the target surface between rows of impressions 500 generated by the teeth 513 as the roller rotates and moves across the target surface. The tapered regions of the concave middle section of the roller act so as to urge material from the target surface towards a central region of the pathway 550. In this way material from edge regions of the pathway are drawn towards a central region resulting in a pathway having a convex cross section. That is to say, material is piled higher in the central region of the pathway than at its edges. A respective row of impressions is produced on either side of the convex pathway. This can establish or re-establish a pathway.

It will be noted that the shape of the impressions 500 shown in Figures 5 and 6 are different from the shape of the impressions 100 shown in Figure 1 to 4. This is due to the modified shape of the teeth. It will be appreciated that a distance x between tips of the impressions 100, 500, are long relative to a corresponding length of the teeth 113, 513 used to generate them. The extension in length is due to the slipping motion between the rollers and the target surface caused by offsetting the axis of rotation of the roller with respect to a direction of advancement. As a result impressions providing relatively large size reservoirs for trapping rainwater are generated. The widths and shapes of the impressions can also be determined by selecting a desired design of the teeth of the roller.

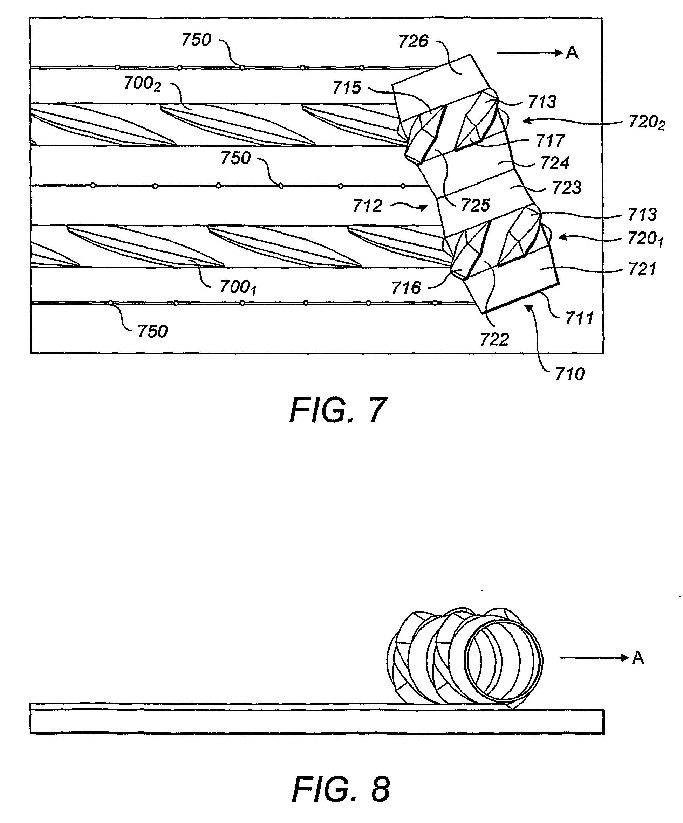

Figure 7 illustrates an alternative embodiment of the present invention. The roller 710 can be supported and driven in a direction of advancement A. A longitudinal axis about which the roller rotates is offset from this direction of advancement by a predetermined angle α as previously described. The body 711 of the roller includes an outer surface 712 and includes two rows of teeth 713. Each tooth has an arcuate nose 715, a central body region 716 and a V-shaped tail 717. A first row 720₁ of teeth 713 is provided at a central region of a first half of the roller. A further row 720₂ of teeth 713 is located at a central region of a second half of the roller. The outer surface 712 of the roller includes a first end region generally tapered outwardly from an end towards the first row 720₁ of teeth 713. The outer surface 712 is substantially cylindrical where the teeth extend outwards therefrom. The outer surface 713 then includes an inwardly tapered region 723 which is tapered inwardly from the cylindrical region 722 where the first row 720₁ is provided towards a centre of the roller. A further tapered region 724 is tapered outwardly from the centred region of the roller towards a further substantially cylindrical region 725 of the outer surface of the roller where the second row 720₂ of teeth 713 is provided. The outer surface of the roller also includes a further tapered region 726 at a remaining end of the roller which tapers inwardly from the cylindrical region 725 where the second row of teeth 720₂ are provided towards the further end of the roller.

The central tapered regions 723, 724 of the outer surface of the roller act to urge material of the target surface between the rows of teeth so as to tend to pile that material in a central region between the rows of impressions 700 which are formed. In this way a region between the rows of impressions has a generally convex cross section. By advancing further roller elements or the same roller elements on a next pass immediately adjacent to the position previously covered regions between next rows of impressions can likewise be formed so as to have a convex cross section. As illustrated in Figure 7 seeds may be planted at desired locations 750 in rows in the convex regions between rows of impressions 700. This aids drainage for plant life subsequently growing from the seeds and can increase soil temperature that speeds up germination and growth.

Figure 8 illustrates the roller shown in Figure 7 as it is advanced in a direction of advancement A.

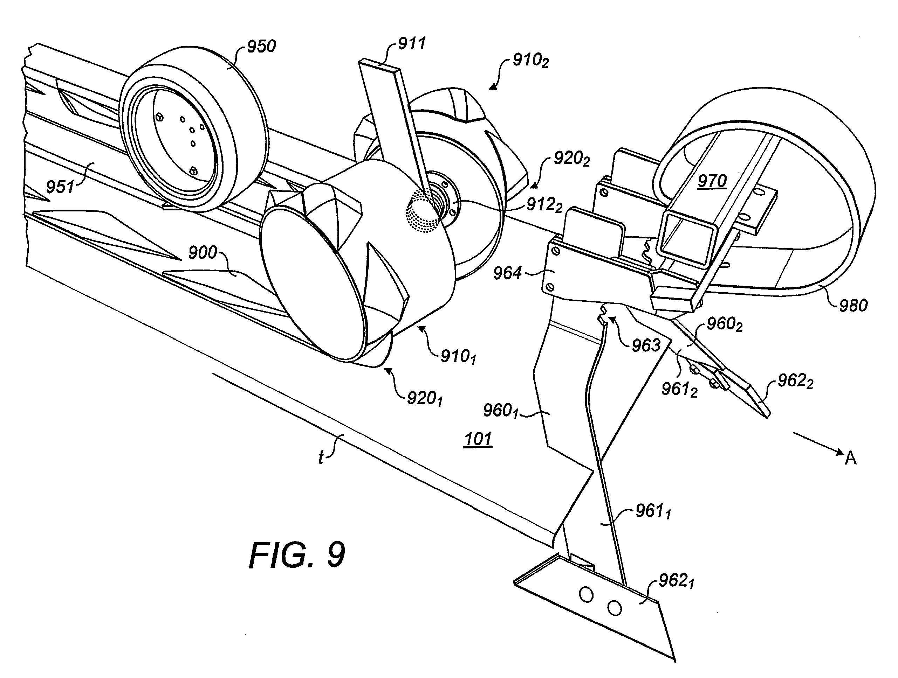

Figure 9 illustrates a further embodiment of the present invention in which two rollers 910₁, 910₂, are supported in an offset and downwardly tilted fashion with respect to each other. These are impelled by a vehicle (part shown) in a direction of advancement A as shown in Figure 9. It will be appreciated that whilst particular rollers 910 are illustrated in Figure 9, various different configurations of the rollers (including, but not limited to, those previously described) could be likewise supported in an angled relationship with respect to each other.

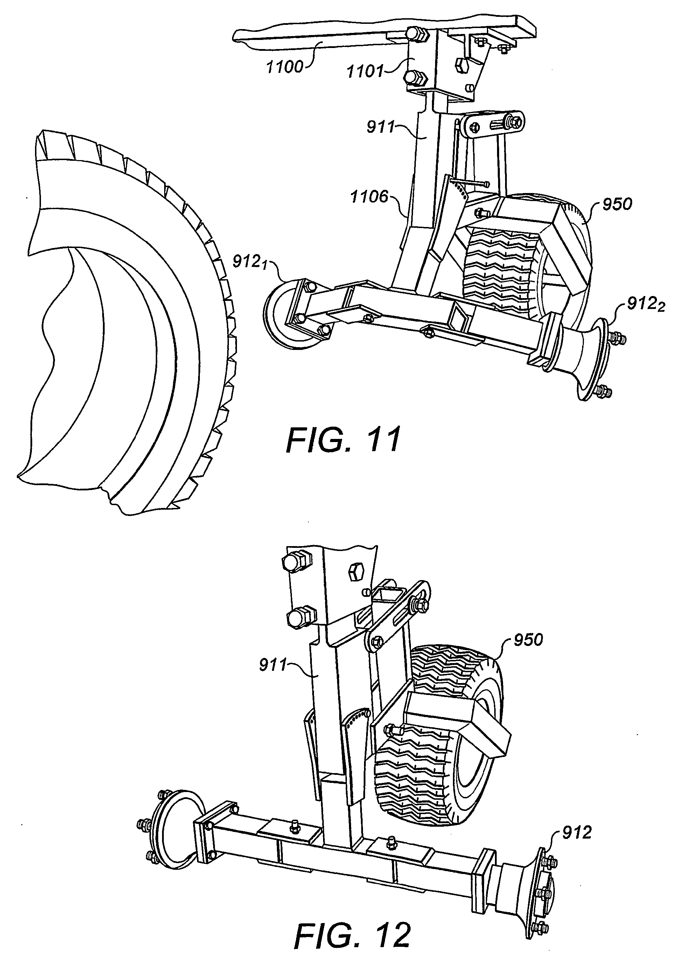

A support bar 911 secured to a vehicle or other driving mechanism is generally "T" shaped (shown better in Figures 11 and 12 below) and supports an end of two rollers via a respective connectors 912₁, 912₂. The first roller 910₁ includes a row 920₁ of teeth at an outer end region of an outer surface of the roller. The row of teeth is thus formed at an end of the roller distal to the central support 911. The second roller 910₂ likewise has a row 920₂ of teeth extending from an outer surface. The row of teeth is likewise formed at an end region of the roller distal to the roller support.

Each roller 910 is supported at an angle α offset from a direction of an advancement A. The axis of rotation of each roller in the pair of rollers is equally offset by an angle β which is between 178° and 120°. Preferably β is between 120° and 80°.

As the vehicle driving the support 911 moves in the direction of advancement the rollers rotate by virtue of the friction between the outer surface and teeth of the roller and the target surface 101. The teeth penetrate into the target surface 101 and leave impressions 900 in rows in the ground.

Whilst the rollers have a longitudinal axis of rotation offset from the angle of advancement, as above described, the rollers may optionally additionally be tilted in either a drooped or level or raised arrangement. A drooped arrangement is illustrated in Figure 9. The angle of droop for each roller may be the same or rollers may have different degrees of droop. Different degrees of droop may be particularly useful when the target surface is banked. The angle of droop or uplift may be between 0 and 30°.

A trailing wheel 950 is supported in a fixed relationship with respect to the location of the rollers or, variably loaded to follow the ground contour and act as a depth control. As the vehicle pulling the rollers and wheel advances in a direction of advancement A the wheel 950 flattens an upper surface 951 of material caused to pile up in the region between the rollers. A convex pathway having a slightly flattened top can thus be established or re-established according to this embodiment. It will be appreciated that the wheel 950 may rotate about an axis or may be held in a fixed position to carry out the flattening operation. Likewise, instead of a wheel 950 a flat or arcuate flattening tool may be held in a fixed relationship with respect to the rollers.

The wheel 950 is held in a trailing position with respect to the rollers. As illustrated in Figure 9 tines 960₁, 960₂, may also be driven by a vehicle in the direction of advancement A. The tines 960 are held in a fixed leading relationship with respect to the location where the rollers are supported. It will be understood that optionally the tines may be fixed, rotary or any other type of loosening means. Each tine includes an elongate shaft 961₁, 961₂, with a respective blade 962₁, 962₂, fixed to the bottom of the shaft. Alternatively the blade and shaft may be integrally formed. An upper portion of the shaft includes a height adjustment mechanism which, as illustrated in Figure 9, may include teeth 963. The location of the teeth in the upper portion of the shaft between locating plates 964, which are held in a juxtaposed position, determines the height in which the shaft and blades of the tines penetrates into an upper surface of the target surface 101 as a vehicle advances. The tines are secured to a vehicle bar 970 which is rigidly secured to a vehicle or to a piece of equipment propelled by a vehicle in a rigid manner. The tines are secured to this bar via a metallic spring 980 which biases the tine downwardly against the target surface so that the tines, or at least the blades of the tines, penetrate into the target surface. The biasing spring 980 also provides a certain amount of give so that motion is not prevented if a particularly hard area of land is being treated or the tines contact a rock.

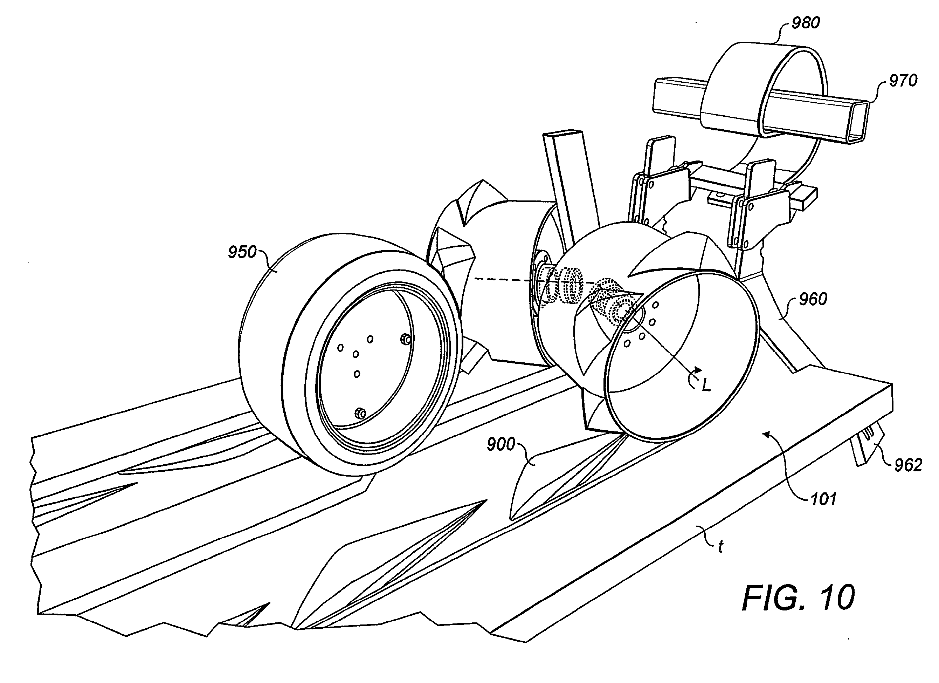

Figure 10 illustrates an alternative view of the embodiment illustrated in Figure 9. As illustrated in Figure 10 the rollers rotate about respective axes of rotation L which is tilted in a dropping fashion in a downwards direction from a horizontal plane and is also offset from an axis transverse to a direction of advancement A. As the rollers are impelled by a vehicle or equipment secured to a vehicle in a direction of advancement the rollers rotate and the teeth produce impressions 900 in the target surface 101. As the rollers rotate there is both a rotational effect as well as a slip and slide effect caused by the offset of the axis of rotation with respect to a direction of advancement. This helps ensure that the outer surface of the roller and teeth remains clean as the roller rotates. A result is also that a length of each impression 900 exceeds a respective length of a tooth on the outer surface of the roller which causes the impression.

As the rollers advance the target surface is pre-treated by penetration of the tines into the target surface. The target surface downstream of the location where the rollers are held is also treated by the wheel 950. This flattens to a degree a convex upper surface generated by piling material in a region between the rows of teeth on the rollers. The piling action is caused by the shape of the outer surface of the rollers and the position in which they are both held. The wheel 950 is of course optional.

It will be appreciated that whilst Figures 9 and 10 illustrate the target surface 101 as having a thickness t this is by way of example only. In fact the tines and blades may continue to penetrate into a target surface many inches down into the ground.

Figure 11 illustrates the support 911 and wheel 950 shown in Figures 9 and 10 in more detail. As illustrated in Figure 11 the support 911 is a generally vertical bar extending downwardly from a vehicle 1100 or part of equipment 1100 driven by a vehicle. The support bar 911 is secured to the vehicle 1100 via a connector 1101. A T-piece 1105 is hingedly secured to the support bar 911 and is releasably secured to the support bar 911 in a hingedly locatable fashion. The T-piece can thus be angled by pivoting about a hinge point 1106. This can be utilised to select the height at which the rollers are supported. Each roller is independently secured to a respective connector 912 which is likewise hingedly secured to the T-piece 1105. Alternatively the rollers may be connected directly to the T-piece 1105. Each connector 912 can thus provide a further degree of freedom of alignment which is independent of each other. In this way the rollers 920 may be held in both a position which is tilted in an upwards or downwards or horizontal direction with respect to a horizontal plane as well as being offset at an angle between a direction of advancement.

The wheel 950 may also be secured to the support bar 911 so that as a vehicle advances the outer surface of the wheel 950 will at least slightly flatten an upper convex surface of the target surface generated by the rollers.

Figure 12 helps illustrate the degrees of motion possible by the roller support illustrated in Figure 11. In this configuration the support is held in a substantially horizontal and non-offset position.

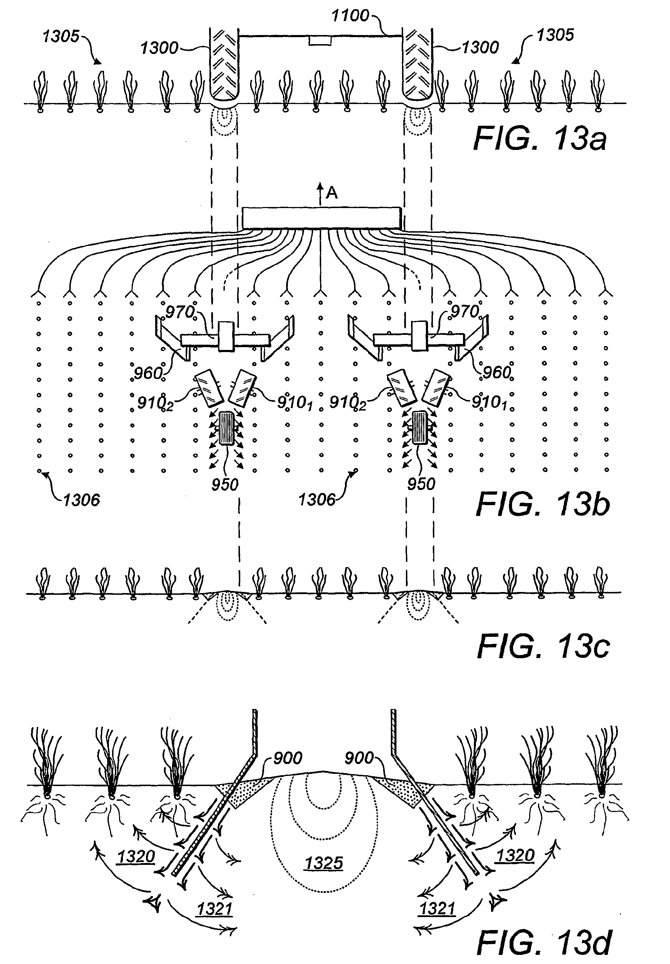

Figure 13 illustrates how two of the apparatus illustrated in Figures 9 and 10 may be drawn simultaneously in a side by side configuration by a vehicle.

As illustrated in Figure 13a a vehicle 1100 has tractor tyres 1300, a predetermined space apart which are driven along pre-established pathways. Alternatively in a first instance the vehicle motion establishes the pathways. Crops 1305 illustrate the locations where plant crops will, in the future, grow.

Figure 13b illustrates how a vehicle driven in a direction of advancement A may plant the crops 1305 in rows 1306. Two spaced apart pieces of equipment of the type illustrated in Figures 9 and 10 are drawn by the vehicle 1100 in the direction of advancement. Each piece of equipment includes a drive bar 970 supporting tines 960 together with a respective pair of rollers 910. Respective wheels 950 are also moved forward to slightly flatten the cambered pathway created by the rollers 910.

Figure 13c illustrates how the pathways 1310, where the wheels 1300 have previously driven over, are established or re-established into a cambered cross section.

Figure 13d illustrates a convex pathway after it has been established or re-established in more detail. The tines act as loosening means in the material of the target surface at an angle outwards to an adjoining crop/crop growing area. They loosen and move the material such as soil minimally, but create a channel/slot whose soil surface entry is directly in the path of following teeth. This provides direct infiltration and drainage of the water from the reservoirs away from the centre cambered area and towards the adjoining crop roots in a manner according to the arrows shown in Figure 13d. The loosening also ensures consistent penetration of the teeth to create accurate reservoirs. Figure 13d also illustrates in cross section how a row of impressions 900 are generated on either side of the convex surface of the pathway immediately adjacent to the pathway.

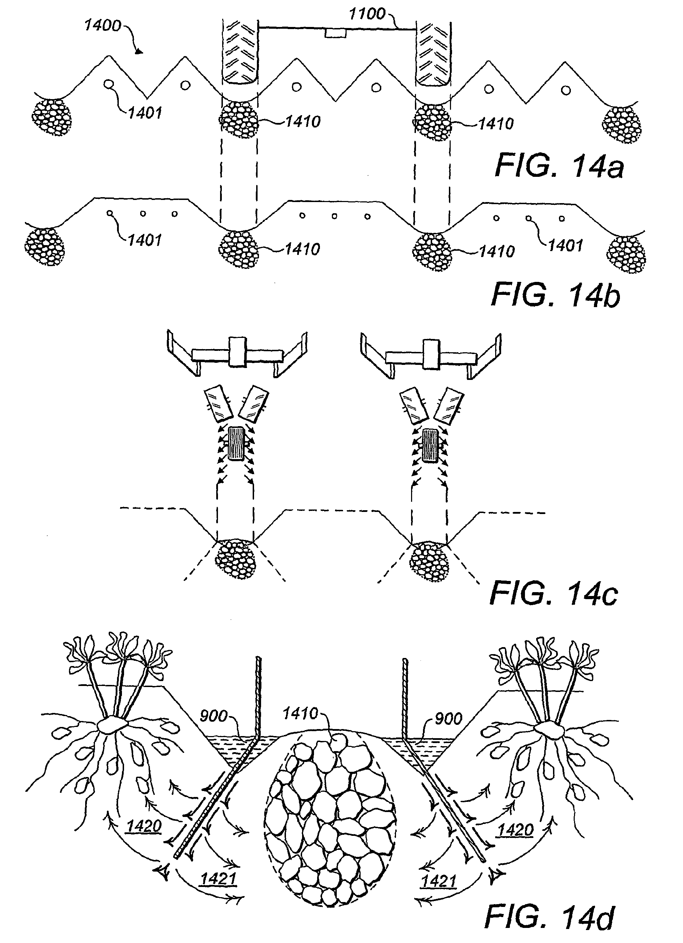

Figure 14 illustrates an alternative embodiment of the present invention in which two sets of equipment, as illustrated in Figures 9 and 10, may be drawn side by side by a vehicle 1100. As opposed to the substantially flat target surface illustrated in Figure 13 the target surface of the land shown in Figures 14a and 14b include profiled regions 1400 where one or more root crops 1401 may be planted. As illustrated in Figure 14 when pathways have already been established well compressed regions which may include placed stones and clods 1410 by drawing the equipment, suitably aligned, along these pathways impressions may be generated on either side of the previously established pathway. Additionally, the camber of the pathway may be established or re-established. Impressions 900 are generated on either side of the cambered surface of the pathway which helps prevent water run off during rainfall or when irrigation water is applied. As illustrated in Figure 14d the tines, if used, operate to loosen and make a channel to direct infiltrating water from the reservoirs to the roots of the adjoining crops, leaving any clods and stones undisturbed and in a load bearing state.

It will be appreciated by those skilled in the art with reference to Figures 13 and 14 that embodiments of the present invention are thus applicable to the treatment of land where cereal crops and/or root crops and other crop varieties are used.

The creation of impressions and barriers/bunds that are consolidated by incorporating teeth onto a substantially flat roller ensure that a soil surface created is totally consolidated and has a lowered tilth index. Also an improved surface redirection of water into the impressions and improved soil surface particle stability is produced which reduces degradation of the impressions by wind and water.

The creation of consolidated impressions only by incorporating the teeth onto a skeletal frame to form a periphery of the roller means that the soil surface created is only partially consolidated i.e. the impressions allow below surface consolidation with non-consolidated barriers/bunds. This particular combination is a favoured practice where deep consolidation and a loose surface is beneficial for sequential operations whilst having the benefit of soil surface water storage.

With prior art techniques, cleaning a space between blades of rotary soil manipulating devices, particularly flat surfaces and wedged shaped indentors has only been successful when using resilient materials. Embodiments of the present invention enable teeth to move through the soil with up to 100% or more slip. The slip takes place in between the teeth and contact surface of the roller and results in scouring. In normal soil conditions no further cleaning is required but in extreme conditions i.e. adhesive soils, mechanical scrapers can of course be attached to clean the area of the roller that is in contact with the soil and in the shadow of the teeth. Since the scrapers are attached to the roller they are automatically orientated with the roller and have continuous contact with the soil contacting surface as it rotates irrespective of an angle of orientation.

It will be understood that features of the present invention may be incorporated into single wheel units, left hand and right hand wheel units, multiple wheel units operating as one unit and left and right hand rollers operating as a one piece roller.

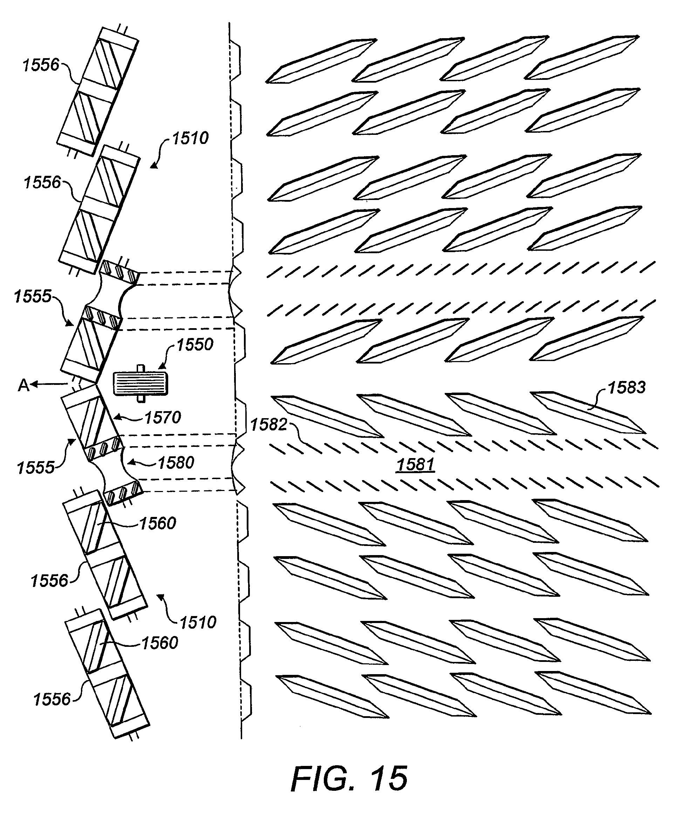

Figure 15 illustrates an alternative embodiment of the present invention in which a vehicle moving in a direction of advancement A may be used to drive many rollers. Also how those rollers may themselves each be independently shaped to generate a particular form of impressions and/or pathways in a surface over which they are drawn. As illustrated in Figure 15 the plurality of rollers includes three rollers 1510 on either side of the vehicle. A trailing wheel 1550 may be used to consolidate and flatten the small ridge of loose soil created by soil escaping through the centre gap between rollers. As illustrated in Figure 15 the two central rollers 1555 share a common configuration but are supported as mirror images to one another. Two outermost rollers 1556 are supported to either side of the central rollers. Each of the outermost rollers 1556 includes two respective rows of teeth 1560 which extend outwardly from a substantially cylindrical region of the outer surface of the roller. A central region of these rollers is also substantially cylindrical.

By contrast the central rollers 1555 include a substantially cylindrical end 1570 and a substantially concave end 1580. The substantially cylindrical end 1587 of the central roller 1555 includes a row of teeth having a first predetermined dimension and orientation. The concave end of the roller has a row of teeth on either side of it and these teeth 1590 have a different size and optionally orientation from the first row of teeth. The concave outer surface of the end of the central roller 1555 generates a concave pathway 1581 as it is advances in the direction A. Two rows of impressions 1582 are generated by the teeth on either side of the concave portion of the central roller 1555. These impressions 1582 have a predetermined shape and configuration which is determined by the orientation and size and shape of the teeth, the material of the target surface and the speed of advancement. The further row of teeth in the substantially cylindrical portion 1570 of a central roller generates a row of impressions 1583 having a dissimilar shape and size from the row of impressions generated immediately adjacent to the pathway 1581 which is established or re-established.

As illustrated in Figure 15 the shape and configuration of impression generated in a surface of land may be selected by determining a number of rollers driven by a vehicle and the orientation and shape of rows of teeth and an outer surface of each roller.

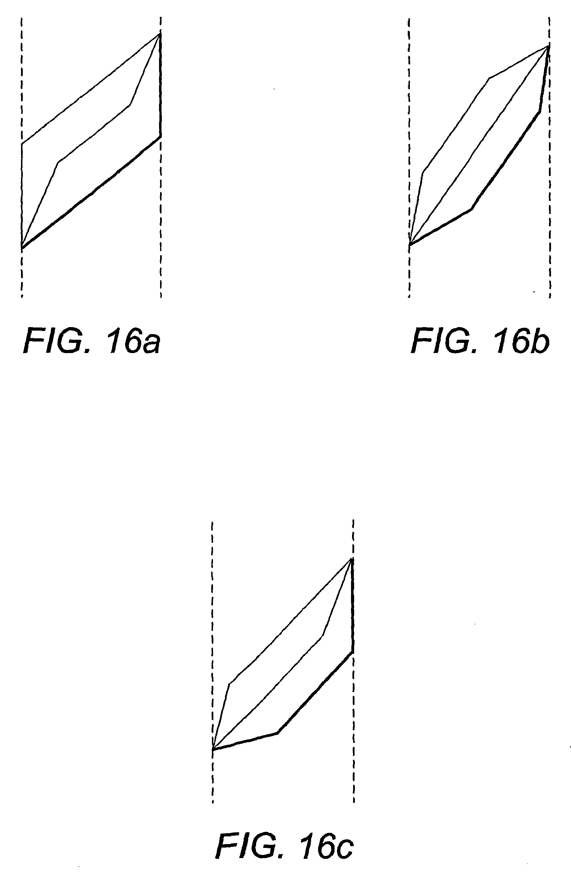

Figure 16 illustrates three of the many possible shapes of teeth which can be used according to certain embodiments of the present invention. As illustrated in Figure 16a a plan view of the tooth indicates that a tooth has two ends. Each of these can be offset from a central ridge region. As illustrated in Figure 16b as an alternative a tooth may have ends which are aligned with a central ridge. Figure 16c illustrates how one end of a tooth can be offset whilst another aligned with a central ridge region. An offset end provides more sideways soil movement for creating a raised centre camber as well as increasing water entry area into a reservoir formed as an impression. A central end provides less sideways soil movement so creating a substantially level treated surface. An offset end and central end combination provides soil movement to make a camber with minimal movement at an opposite end.

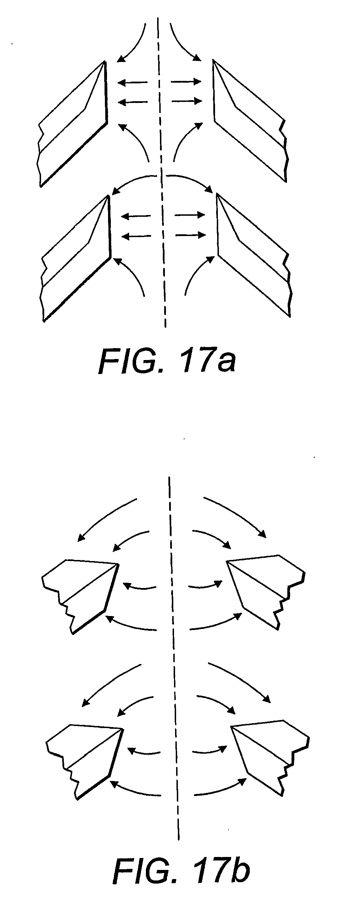

Figure 17 illustrates how the shape of the impressions formed in a target surface may be formed by respective teeth shapes. Also how the shape of the impression made affects water run-off from a central cambered pathway illustrated by the dotted lines. As illustrated in Figure 17a the off centre ends adjoining the centre camber area provide the quickest, smoothest route for water to run from the camber into the reservoirs formed as impressions on each side of the pathway. This reduces the opportunity for infiltration so maintaining a dry load bearing pathway. This also maximises the area of the pathway and reservoir. By contrast using teeth substantially aligned with the central ridge produces impressions which provide a longer route for water to run from the camber into the reservoirs on each side of the camber. This increases the opportunity for infiltration which may be required on occasions.

## Claims

1. A method of forming a plurality of impressions (100) in a target surface (101), comprising the steps of:
urging a roller element (110) (510) (710) (910) arranged to rotate about a longitudinal axis (L), in a direction of advancement (A) over a target surface (101), an angle (X) between said direction of advancement (A) and said longitudinal axis being between 89° and 30°; and
as the roller element (110) (510) (710) (910) rotates, forming successive impressions (100) in the target surface (101) via at least one tooth element (113) (513) (713) extending outwardly at a respective region of an outer surface (112) of the roller element (110) (510) (710) (910), each said impressions (100) being formed via a combination of sliding and urging each tooth element (113) (513) (713) against the target surface (101) as the roller element (110) (510) (710) (910) rotates.

2. The method as claimed in claim 1, further comprising the steps of:
forming successive impressions (100) via a plurality of tooth elements (113) (513) (713) commonly aligned and shaped and arranged circumferentially around the outer surface (112) of the roller element (110) (510) (710) (910).

3. The method as claimed in claim 1 or 2, further comprising the steps of:
via material at the target surface (110), cleaning the outer surface (112) of the roller element (110) (510) (710) (910) and/or each tooth element (113) (513) (713) via a scouring motion induced by respective motion between the roller element (110) (510) (710) (910) and the target surface (101) as the roller element (110) (510) (710) (910) advances over the target surface (101), and preferably
further comprising the steps of:
c leaning the contact surface of the roller element (110) (510) (710) (910) automatically and continuously as previously out of contact regions of the contact surface of the roller element (110) (510) (710) (910) and tooth elements (113) (513) (713) contact the target surface (101).

4. The method as claimed in any preceding claim, further comprising the steps of:
urging the roller element (110) (510) (710) (910) in the direction of advancement (A) by supporting the roller element (110) (510) (710) (910) with a roller element support (911) and pulling or pushing the roller element support (911) via a vehicle travelling in the direction of advancement, and further comprising the steps of:
successively imprinting impressions (100) (500) (700) (900) in the target surface (101) having a predetermined shape, a major length associated with the predetermined shape of each impression (100) (500) (700) (900) comprising substantially double or more of a length of a tooth element (113) (513) (713) of the roller element (110) (510) (710) (910), and/or further comprising the steps of:
an axis of each impression (100) (500) (700) (900) formed in the target surface (101) is offset from a direction of advancement (A) of the roller element (110) (510) (710) (910) by an angle substantially corresponding to half of the angle between a direction transverse to said direction of advancement (A) and said longitudinal axis (L).

5. The method as claimed in any one of claims 1 to 4, further comprising establishing or re-establishing a convex pathway (500) via the steps of:
urging the roller element (110) (510) (710) (910) along a pathway formed on a region of land, the outer surface of the roller element (110) (510) (710) (910) comprising a dished central region (530) and at least one tooth element (113) (513) (713) extending outwardly at each of a first and second side of the dished region (530); whereby
the tooth elements (113) (513) (713) on each side of the dished region successively imprint respective impressions on each side of the pathway, or
urging the roller element (110) (510) (710) (910) over a region of land, the outer surface of the roller element (110) (510) (710) (910) comprising a dished central region and at least one tooth element (113) (513) (713) extending outwardly at each of a first and second side of the dished region; whereby
the tooth elements (113) (513) (713) on each side of the dished region successively imprint respective impressions (100) (500) (700) (900) adjacent to a raised strip region formed in the target surface (101) and corresponding to a path taken by the dished region.

6. Apparatus for providing a plurality of impressions (100) (500) (700) (900) in a target surface (101), comprising:
a roller element (110) (510) (710) (910) arranged to rotate about a longitudinal axis (L) and comprising a plurality of tooth elements (113) (513) (713) disposed circumferentially around the outer surface of the roller element each extending outwardly at a respective region of an outer surface of the roller element (110) (510) (710) (910); and
a roller element support that supports the roller element (110) (510) (710) (910) and allows rotation of the roller element (110) (510) (710) (910) with respect to the support; wherein
the roller element (110) (510) (710) (910) is movable in a direction of advancement (A), the longitudinal axis (L) of the roller element (110) (510) (710) (910) being disposed at an angle of between 89° and 30° to the direction of advancement (A), **characterised in that**
each tooth element (113) (513) (713) comprises a body portion being substantially parallelogram shaped proximate to the contact surface and blending into a ridge region distal said contact surface, or
each tooth element (113) (513) (913) comprises a body portion having a substantially V-shaped nose portion, a substantially V-shaped tail portion and a substantially rectangular body portion between the tail portion and nose portion, or
each tooth element (113) (513) (713) comprises a body portion having a substantially arcuate nose portion and a substantially V-shaped tail portion extending from the nose portion, the nose portion being disposed to engage the target surface prior to the tail portion as the roller element (110) (510) (710) (713) rotates.

7. The apparatus as claimed in claim 6, further comprising:
each tooth element (113) (513) (713) comprises an elongate protrusion extending outwardly from the outer surface, a major axis associated with the protrusion being offset from a projection of the longitudinal axis (L) on an upper plan view of the roller by a predetermined angle, and preferably
wherein the predetermined angle substantially equals twice the angle disposed between the longitudinal axis (L) and a direction transverse to the direction of advancement (A), and more preferably
wherein said predetermined angle comprises an angle between 40° and 60°.

8. The apparatus as claimed in of claim 6 or 7 wherein:
the outer surface comprises a dished or convex region (530) extending circumferentially around the outer surface with a plurality of tooth elements (113) (513) (713) disposed circumferentially around the outer surface to at least one side of the dished or convex region (530).

9. A land and/or roadworthy vehicle useable for land management, comprising:
drive means for moving the vehicle over land and/or along a road; and
the apparatus as claimed in any one of claims6, 7 or 8.

10. Apparatus for providing a plurality of impressions (100) in a target surface, comprising:
a first apparatus as claimed in claim 6, being a first roller element (110) (510) (710) (910) arranged to rotate about a respective first longitudinal axis (L) and a first roller element support that supports the roller element (110) (510) (710) (910) and allows rotation of the first roller element with respect to the first support; and
a second apparatus as claimed in claim 6, being a second roller element (110) (510) (710) (910) arranged to rotate about a respective further longitudinal axis (L) and a second roller element support that supports the second roller element and allows rotation of the second roller element (110) (510) (710) (910) with respect to the second roller element support.

11. The apparatus as claimed in claim 10, further comprising:
the first longitudinal axis (L) and the second longitudinal axis are disposed at an angle with respect to each other of between 179 and 60°, and preferably
wherein the first and second roller elements (110) (510) (710) (910) are disposed at a common angle to a direction transverse to the direction of advancement (A).

12. The apparatus as claimed in any one of claims 10 or 11, further comprising:
each roller element support supports a respective roller element (110) (510) (710) (910) in a downwardly tilted position such that a first end of a roller element (110) (510) (710) (910) proximate to the roller element support is supported at a position distal to said target surface with respect to a further end of the roller element (110) (510) (710) (910 distal to the roller element support.

13. The apparatus as claimed in any one of claims 10, 11 or 12, further comprising:
a compacting element (950) disposed at a location behind the first and second roller elements (110) (510) (710) (910 in the direction of advancement (A) and at a location corresponding to a region between the roller elements (110) (510) (710) (910, and preferably
wherein the compacting element (950) is a roller or wheel.

14. The apparatus as claimed in any one of claims 10 to 13 wherein the first and second roller element supports are supported by a common support.

15. The apparatus as claimed in any one of claims 10 to 14, further comprising:
at least two downwardly extending tines (960) located in front of the first and second roller elements (110) (510) (710) (910 with respect to the direction of advancement (A) and each having a target surface (101) engaging portion located to disturb material of the target surface (101) and a respective subsurface region proximate to locations where impressions (100) are formed, and preferably
wherein a height of the tines (960) is adjustable to select a depth of penetration into material of the target surface (101), and optionally
wherein the tines (960) are supported via at least one biasing element.

## Patentansprüche

1. Verfahren zur Bildung einer Mehrzahl von Eindrücken (100) in einer Zieloberfläche (101), wobei das Verfahren die folgenden Schritte umfasst:
das Antreiben eines Walzenelements (110) (510) (710) (910), das so angeordnet ist, dass es sich um eine Längsachse (L) dreht, in eine Bewegungsrichtung (A) über eine Zieloberfläche (101), wobei ein Winkel (X) zwischen der genannten Bewegungsrichtung (A) und der genannten Längsachse zwischen 89° und 30° liegt; und
während sich das Walzenelement (110) (510) (710) (910) dreht, das Bilden aufeinanderfolgender Eindrücke (100) in der Zieloberfläche (101) über mindestens ein Zahnelement (113) (513) (713), das sich in einem entsprechenden Bereich einer äußeren Oberfläche (112) des Walzenelements (110) (510) (710) (910) nach außen erstreckt, wobei jeder der genannten Eindrücke (100) gebildet wird durch eine Kombination aus Schieben und Drücken jedes Zahnelements (113) (513) (713) gegen eine Zieloberfläche (101), während sich das Walzenelement (110) (510) (710) (910) dreht.

2. Verfahren nach Anspruch 1, wobei dieses ferner die folgenden Schritte umfasst:
das Bilden aufeinanderfolgender Eindrücke (100) über eine Mehrzahl von Zahnelementen (113) (513) (713), die gemeinsam umfänglich um die äußere Oberfläche (112) des Walzenelements (110) (510) (710) (910) ausgerichtet und geformt sowie angeordnet sind.

3. Verfahren nach einem der Ansprüche 1 oder 2, wobei das Verfahren ferner die folgenden Schritte umfasst:
über Material auf der Zieloberfläche (110) das Reinigen der äußeren Oberfläche (112) des Walzenelements (110) (510) (710) (910) und/oder jedes Zahnelements (113) (513) (713) durch eine Scheuerbewegung, die durch eine entsprechende Bewegung zwischen dem Walzenelement (110) (510) (710) (910) und der Zieloberfläche (101) induziert wird, während sich das Walzenelement (110) (510) (710) (910) über die Zieloberfläche (101) bewegt; und wobei das Verfahren ferner vorzugsweise die folgenden Schritte umfasst:
das automatische und fortlaufende Reinigen der Kontaktoberfläche des Walzenelements (110) (510) (710) (910), wenn zuvor kontaktlose Bereiche der Kontaktoberfläche des Walzenelements (110) (510) (710) (910) und der Zahnelemente (113) (513) (713) die Zieloberfläche (101) berühren.

4. Verfahren nach einem der vorstehenden Ansprüche, wobei dieses ferner die folgenden Schritte umfasst:
das Antreiben des Walzenelements (110) (510) (710) (910) in die Bewegungsrichtung (A) durch Tragen des Walzenelements (110) (510) (710) (910) mit einem Walzenelementträger (911) und Ziehen oder Schieben des Walzenelementträgers (911) mithilfe eines Fahrzeugs, das sich in die Bewegungsrichtung bewegt, und wobei das Verfahren ferner die folgenden Schritte umfasst:
das aufeinanderfolgende Eindrücken von Eindrücken (100) (500) (700) (900) mit einer vorbestimmten Form in die Zieloberfläche (101), wobei eine Hauptlänge, welche der vorbestimmten Form jedes Eindrucks (100) (500) (700) (900) zugeordnet ist, im Wesentlichen die doppelte oder eine noch größere Länge als die Länge eines Zahnelements (113) (513) (713) des Walzenelements (110) (510) (710) (910) umfasst, und/oder wobei das Verfahren ferner die folgenden Schritte umfasst:
den Versatz einer Achse jedes in der Zieloberfläche (101) ausgebildeten Eindrucks (100) (500) (700) (900) zu einer Bewegungsrichtung (A) des Walzenelements (110) (510) (710) (910) um einen Winkel, der im Wesentlichen der Hälfte des Winkels zwischen einer Richtung, die transversal zu der genannten Bewegungsrichtung (A) verläuft, und der genannten Längsachse (L) entspricht.

5. Verfahren nach einem der Ansprüche 1 bis 4, wobei dieses ferner das Erzeugen oder das neuerliche Erzeugen eines konvexen Pfads (500) über die folgenden Schritte umfasst:
das Antreiben des Walzenelements (110) (510) (710) (910) entlang eines Pfads, der auf einem Landbereich ausgebildet ist, wobei die äußere Oberfläche des Walzenelements (110) (510) (710) (910) einen einwärts gekrümmten zentralen Bereich (530) umfasst, und wobei sich mindestens ein Zahnelement (113) (513) (713) an jeder Seite einer ersten und einer zweiten Seite des einwärts gekrümmten Bereichs (530) auswärts erstreckt; wodurch
die Zahnelemente (113) (513) (713) auf jeder Seite des einwärts gekrümmten Bereichs aufeinanderfolgend entsprechende Eindrücke auf jeder Seite des Pfads eindrücken; oder
das Walzenelement (110) (510) (710) (910) über einen Landbereich angetrieben wird, wobei die äußere Oberfläche des Walzenelements (110) (510) (710) (910) einen einwärts gekrümmten zentralen Bereich aufweist, und wobei sich mindestens ein Zahnelement (113) (513) (713) auf jeder Seite einer ersten Seite und einer zweiten Seite des einwärts gekrümmten Bereichs auswärts erstreckt; wodurch
die Zahnelemente (113) (513) (713) auf jeder Seite des einwärts gekrümmten Bereichs aufeinanderfolgend entsprechende Eindrücke (100) (500) (700) (900) angrenzend an einen Bereich mit einem erhöhten Streifen eindrücken, der in der Zieloberfläche (101) ausgebildet ist und einem von dem einwärts gekrümmten Bereich zurückgelegten Pfad entspricht.

6. Vorrichtung zum Vorsehen einer Mehrzahl von Eindrücken (100) (500) (700) (900) in einer Zieloberfläche (101), wobei die Vorrichtung folgendes umfasst:
ein Walzenelement (110) (510) (710) (910), das so angeordnet ist, dass es sich um eine Längsachse (L) dreht, und wobei es eine Mehrzahl von Zahnelementen (113) (513) (713) umfasst, die umfänglich um die äußere Oberfläche des Walzenelements angeordnet sind, wobei sich jedes Zahnelement an einem entsprechenden Bereich einer äußeren Oberfläche des Walzenelements (110) (510) (710) (910) auswärts erstreckt; und
einen Walzenelementträger, der das Walzenelement (110) (510) (710) (910) trägt und eine Rotation des Walzenelements (110) (510) (710) (910) im Verhältnis zu dem Träger ermöglicht; wobei:
das Walzenelement (110) (510) (710) (910) in eine Bewegungsrichtung (A) beweglich ist, wobei die Längsachse (L) des Walzenelements (110) (510) (710) (910) in einem Winkel zwischen 89° und 30° zu der Bewegungsrichtung (A) angeordnet ist; **dadurch gekennzeichnet, dass**:
jedes Zahnelement (113) (513) (713) ein Körperteilstück umfasst, das im Wesentlichen die Form eines Parallelogramms aufweist und sich in der Nähe der Kontaktoberfläche befindet und sich in einen Kammbereich einfügt, der distal zu der genannten Kontaktoberfläche angeordnet ist; oder wobei
jedes Zahnelement (113) (513) (913) ein Körperteilstück umfasst, das ein im Wesentlichen V-förmiges Nasenteilstück, ein im Wesentlichen V-förmiges Schwanzteilstück und ein im Wesentlichen rechteckiges Körperteilstück zwischen dem Schwanzteilstück und dem Nasenteilstück aufweist; oder wobei
jedes Zahnelement (113) (513) (713) ein Körperteilstück umfasst, das ein im Wesentlichen bogenförmiges Nasenteilstück und ein im Wesentlichen V-förmiges Schwanzteilstück aufweist, das sich von dem Nasenteilstück erstreckt, wobei das Nasenteilstück so angeordnet ist, dass es während der Rotation des Walzenelements (110) (510) (710) (910) vor dem Schwanzteilstück mit der Zieloberfläche eingreift.

7. Vorrichtung nach Anspruch 6, wobei diese ferner folgendes umfasst:
jedes Zahnelement (113) (513) (713) umfasst einen elongierten Vorsprung, der sich von der äußeren Oberfläche auswärts erstreckt, wobei eine dem Vorsprung zugeordnete Hauptachse von einem Vorsprung der Längsachse (L) in einer Draufsicht von oben der Walze um einen vorbestimmten Winkel versetzt ist; und wobei vorzugsweise der vorbestimmte Winkel im Wesentlichen dem Zweifachen des Winkels entspricht, der sich zwischen der Längsachse (L) und einer Richtung befindet, die transversal zu der Bewegungsrichtung (A) ist; und wobei
darüber hinaus bevorzugt wird, dass der genannte vorbestimmte Winkel einen Winkel zwischen 40° und 60° umfasst.

8. Vorrichtung nach Anspruch 6 oder 7, wobei:
die äußere Oberfläche einen einwärts gekrümmten oder konvexen Bereich (530) umfasst, der sich umfänglich um die äußere Oberfläche erstreckt, wobei eine Mehrzahl von Zahnelementen (113) (513) (713) umfänglich um die äußere Oberfläche zu mindestens einer Seite des einwärts gekrümmten oder konvexen Bereichs (530) angeordnet ist.

9. Land- und/oder straßentaugliches Fahrzeug, das für die Bodenbearbeitung eingesetzt werden kann, wobei das Fahrzeug folgendes umfasst:
eine Antriebseinrichtung zum Bewegen des Fahrzeugs über Land und/oder auf einer Straße; und
die Vorrichtung nach einem der Ansprüche 6, 7 oder 8.

10. Vorrichtung zum Vorsehen einer Mehrzahl von Eindrücken (100) in einer Zieloberfläche, wobei die Vorrichtung folgendes umfasst:
ein erste Vorrichtung nach Anspruch 6, bei der es sich um ein erstes Walzenelement (110) (510) (710) (910) handelt, das so angeordnet ist, dass es sich um eine entsprechende erste Längsachse (L) dreht, und mit einem ersten Walzenelementträger, der das Walzenelement (110) (510) (710) (910) trägt und eine Rotation des ersten Walzenelements im Verhältnis zu dem ersten Träger ermöglicht; und
eine zweite Vorrichtung nach Anspruch 6, bei der es sich um ein zweites Walzenelement (110) (510) (710) (910) handelt, das so angeordnet ist, dass es sich um eine entsprechende weitere Längsachse (L) dreht, und mit einem zweiten Walzenelementträger, der das zweite Walzenelement trägt und eine Rotation des zweiten Walzenelements (110) (510) (710) (910) im Verhältnis zu dem zweiten Walzenelementträger ermöglicht.

11. Vorrichtung nach Anspruch 10, wobei diese ferner folgendes umfasst:
die erste Längsachse (L) und die zweite Längsachse sind im Verhältnis zueinander in einem Winkel zwischen 179° und 60° angeordnet; und wobei
die ersten und zweiten Walzenelemente (110) (510) (710) (910) vorzugsweise in einem gemeinsamen Winkel zu einer Richtung angeordnet sind, die transversal ist zu der Bewegungsrichtung (A).

12. Vorrichtung nach einem der Ansprüche 10 oder 11, wobei diese ferner folgendes umfasst:
jeder Walzenelementträger trägt ein entsprechendes Walzenelement (110) (510) (710) (910) an einer nach unten geneigten Position, so dass ein erstes Ende eines Walzenelements (110) (510) (710) (910) in der Nähe des Walzenelementträgers an einer Position getragen wird, die distal zu der genannten Zieloberfläche angeordnet ist im Verhältnis zu einem weiteren Ende des Walzenelements (110) (510) (710) (910) distal zu dem Walzenelementträger.

13. Vorrichtung nach einem der Ansprüche 10, 11 oder 12, wobei diese ferner folgendes umfasst:
ein Verdichtungselement (950), das in die Bewegungsrichtung (A) an einer Position hinter den ersten und zweiten Walzenelementen (110) (510) (710) (910) sowie an einer Position angeordnet ist, welche einem Bereich zwischen den Walzenelementen (110) (510) (710) (910) entspricht; und wobei
es sich vorzugsweise bei dem Verdichtungselement (950) um eine Walze oder ein Rad handelt.

14. Vorrichtung nach einem der Ansprüche 10 bis 13, wobei die ersten und zweiten Walzenelementträger durch einen gemeinsamen Träger getragen werden.

15. Vorrichtung nach einem der Ansprüche 10 bis 14, wobei diese ferner folgendes umfasst:
mindestens zwei sich nach unten erstreckende Zinken (960), die in der Bewegungsrichtung (A) vor den ersten und zweiten Walzenelementen (110) (510) (710) (910) angeordnet sind und jeweils ein mit der Zieloberfläche (101) eingreifendes Teilstück aufweisen, das so angeordnet ist, dass es Material der Zieloberfläche (101) ebenso durcheinanderbringt wie einen entsprechenden unter der Oberfläche liegenden Bereich in der Nähe der Stellen, wo Eindrücke (100) gebildet werden, und wobei
die Höhe der Zinken (960) vorzugsweise anpassbar ist, um eine Penetrationstiefe in das Material der Zieloberfläche (101) auszuwählen, und wobei
optional die Zinken (960) über mindestens ein Vorbelastungselement getragen werden.

## Revendications

1. Procédé de formation d'une pluralité d'impressions (100) dans une surface cible (101), comprenant les étapes consistant à :
pousser un élément rouleau (110) (510) (710) (910) agencé pour tourner autour d'un axe longitudinal (L), dans une direction d'avancement (A) sur une surface cible (101), un angle (X) entre ladite direction d'avancement (A) et ledit axe longitudinal étant compris entre 89° et 30° ; et
alors que l'élément rouleau (110) (510) (710) (910) tourne, former des impressions successives (100) dans la surface cible (101) par l'intermédiaire d'au moins un élément dent (113) (513) (713) s'étendant vers l'extérieur au niveau d'une région respective d'une surface externe (112) de l'élément rouleau (110) (510) (710) (910), chacune desdites impressions (100) étant formée par l'intermédiaire d'une combinaison de glissement et de poussée de chaque élément dent (113) (513) (713) contre la surface cible (101) alors que l'élément rouleau (110) (510) (710) (910) tourne.

2. Procédé selon la revendication 1, comprenant en outre l'étape consistant à :
former des impressions successives (100) par l'intermédiaire d'une pluralité d'éléments dents (113) (513) (713) généralement alignés et conformés et agencés de manière circonférentielle autour de la surface externe (112) de l'élément rouleau (110) (510) (710) (910).

3. Procédé selon la revendication 1 ou 2, comprenant en outre l'étape consistant à :
par l'intermédiaire d'un matériau au niveau de la surface cible (110), nettoyer la surface externe (112) de l'élément rouleau (110) (510) (710) (910) et/ou chaque élément dent (113) (513) (713) par l'intermédiaire d'un mouvement de récurage induit par un mouvement respectif entre l'élément rouleau (110) (510) (710) (910) et la surface cible (101) alors que l'élément rouleau (110) (510) (710) (910) avance sur la surface cible (101), et de préférence comprenant en outre l'étape consistant à :
nettoyer la surface de contact de l'élément rouleau (110) (510) (710) (910) automatiquement et de façon continue alors que des régions précédemment hors contact de la surface de contact de l'élément rouleau (110) (510) (710) (910) et des éléments dents (113) (513) (713) sont en contact avec la surface cible (101).

4. Procédé selon l'une quelconque des revendications précédentes, comprenant en outre l'étape consistant à :
pousser l'élément rouleau (110) (510) (710) (910) dans la direction d'avancement (A) en soutenant l'élément rouleau (110) (510) (710) (910) avec un support d'élément rouleau (911) et en tirant ou poussant le support d'élément rouleau (911) par l'intermédiaire d'un véhicule se déplaçant dans la direction d'avancement, et comprenant en outre l'étape consistant à :
successivement imprimer des impressions (100) (500) (700) (900) dans la surface cible (101) ayant une forme prédéterminée, une longueur majeure associée à la forme prédéterminée de chaque impression (100) (500) (700) (900) comprenant essentiellement le double ou plus d'une longueur d'un élément dent (113) (513) (713) de l'élément rouleau (110) (510) (710) (910), et/ou comprenant en outre l'étape consistant à :
décaler un axe de chaque impression (100) (500) (700) (900) formée dans la surface cible (101) par rapport à une direction d'avancement (A) de l'élément rouleau (110) (510) (710) (910) d'un angle correspondant sensiblement à la moitié de l'angle entre une direction transversale à ladite direction d'avancement (A) et ledit axe longitudinal (L).

5. Procédé selon l'une quelconque des revendications 1 à 4, comprenant en outre l'établissement ou le rétablissement d'un chemin convexe (500) par l'intermédiaire des étapes consistant à :
pousser l'élément rouleau (110) (510) (710) (910) le long d'un chemin formé sur une région de terre, la surface externe de l'élément rouleau (110) (510) (710) (910) comprenant une région centrale bombée (530) et au moins un élément dent (113) (513) (713) s'étendant vers l'extérieur au niveau de chacun d'un premier et d'un second côté de la région bombée (530) ; moyennant quoi
les éléments dents (113) (513) (713) sur chaque côté de la région bombée impriment successivement des impressions respectives sur chaque côté du chemin, ou
pousser l'élément rouleau (110) (510) (710) (910) sur une région de terre, la surface externe de l'élément rouleau (110) (510) (710) (910) comprenant une région centrale bombée et au moins un élément dent (113) (513) (713) s'étendant vers l'extérieur au niveau de chacun d'un premier et d'un second côté de la région bombée ; moyennant quoi
les éléments dents (113) (513) (713) sur chaque côté de la région bombée impriment successivement des impressions respectives (100) (500) (700) (900) adjacentes à une région de bande surélevée formée dans la surface cible (101) et correspondant à un chemin pris par la région bombée.

6. Appareil destiné à fournir une pluralité d'impressions (100) (500) (700) (900) dans une surface cible (101), comprenant :
un élément rouleau (110) (510) (710) (910) agencé pour tourner autour d'un axe longitudinal (L) et comprenant une pluralité d'éléments dents (113) (513) (713) disposés de manière circonférentielle autour de la surface externe de l'élément rouleau, chacun s'étendant vers l'extérieur au niveau d'une région respective d'une surface externe de l'élément rouleau (110) (510) (710) (910) ; et
un support d'élément rouleau qui supporte l'élément rouleau (110) (510) (710) (910) et permet la rotation de l'élément rouleau (110) (510) (710) (910) par rapport au support ; dans lequel
l'élément rouleau (110) (510) (710) (910) est mobile dans une direction d'avancement (A), l'axe longitudinal (L) de l'élément rouleau (110) (510) (710) (910) étant disposé à un angle compris entre 89° et 30° par rapport à la direction d'avancement (A), **caractérisé en ce que**
chaque élément dent (113) (513) (713) comprend une partie de corps sensiblement en forme de parallélogramme à proximité de la surface de contact et se mélangeant dans une région de crête distale de ladite surface de contact, ou
chaque élément dent (113) (513) (913) comprend une partie de corps ayant une partie de nez sensiblement en forme de V, une partie de queue sensiblement en forme de V et une partie de corps sensiblement rectangulaire entre la partie de queue et la partie de nez, ou
chaque élément dent (113) (513) (713) comprend une partie de corps ayant une partie de nez sensiblement arquée et une partie de queue sensiblement en forme de V s'étendant à partir de la partie de nez, la partie de nez étant disposée pour venir en prise avec la surface cible avant la partie de queue alors que l'élément rouleau (110) (510) (710) (713) tourne.

7. Appareil selon la revendication 6, dans lequel en outre :
chaque élément dent (113) (513) (713) comprend une saillie allongée qui s'étend vers l'extérieur depuis la surface externe, un axe majeur associé à la saillie étant décalé par rapport à une projection de l'axe longitudinal (L) sur une vue en plan supérieure du rouleau d'un angle prédéterminé, et de préférence
l'angle prédéterminé est sensiblement égal à deux fois l'angle disposé entre l'axe longitudinal (L) et une direction transversale à la direction d'avancement (A), et de préférence
ledit angle prédéterminé comprend un angle compris entre 40° et 60°.

8. Appareil selon la revendication 6 ou 7, dans lequel :
la surface externe comprend une région bombée ou convexe (530) s'étendant en direction circonférentielle autour de la surface externe avec une pluralité d'éléments dents (113) (513) (713) disposés de manière circonférentielle autour de la surface externe d'au moins un côté de la région bombée ou convexe (530).

9. Véhicule terrestre et/ou en état de rouler utilisable pour la gestion des terres, comprenant :
des moyens d'entraînement pour déplacer le véhicule sur un terrain et/ou le long d'une route ; et
l'appareil selon l'une quelconque des revendications 6, 7 ou 8.

10. Appareil destiné à fournir une pluralité d'impressions (100) dans une surface cible, comprenant :
un premier appareil selon la revendication 6, qui est un premier élément rouleau (110) (510) (710) (910) agencé pour tourner autour d'un premier axe longitudinal respectif (L) et un premier support d'élément rouleau qui supporte l'élément rouleau (110) (510) (710) (910) et permet la rotation du premier élément rouleau par rapport au premier support ; et
un second appareil selon la revendication 6, qui est un second élément rouleau (110) (510) (710) (910) agencé pour tourner autour d'un autre axe longitudinal respectif (L) et un second rouleau support de l'élément qui supporte le second élément rouleau et permet la rotation du second élément rouleau (110) (510) (710) (910) par rapport au second support d'élément rouleau.

11. Appareil selon la revendication 10, dans lequel en outre :
le premier axe longitudinal (L) et le second axe longitudinal sont disposés à un angle l'un par rapport à l'autre compris entre 179 et 60°, et de préférence
les premier et second éléments rouleaux (110) (510) (710) (910) sont disposés à un angle commun par rapport à une direction transversale à la direction d'avancement (A).

12. Appareil selon l'une quelconque des revendications 10 ou 11, dans lequel en outre :
chaque support d'élément rouleau supporte un élément rouleau respectif (110) (510) (710) (910) dans une position inclinée vers le bas de sorte qu'une première extrémité d'un élément rouleau (110) (510) (710) (910) à proximité du support d'élément rouleau est supportée à une position distale par rapport à ladite surface cible par rapport à une autre extrémité de l'élément rouleau (110) (510) (710) (910) distale du support d'élément rouleau.

13. Appareil selon l'une quelconque des revendications 10, 11 ou 12, comprenant en outre :
un élément de compactage (950) disposé au niveau d'un emplacement derrière les premier et second éléments rouleaux (110) (510) (710) (910) dans la direction d'avancement (A) et à un emplacement correspondant à une région entre les éléments rouleaux (110) (510) (710) (910), et de préférence
dans lequel l'élément de compactage (950) est un rouleau ou une roue.

14. Appareil selon l'une quelconque des revendications 10 à 13, dans lequel les premier et second supports d'élément rouleau sont supportés par un support commun.

15. Appareil selon l'une quelconque des revendications 10 à 14, comprenant en outre :
au moins deux dents s'étendant vers le bas (960) situées en face des premier et second éléments rouleaux (110) (510) (710) (910) par rapport à la direction d'avancement (A) et ayant chacune une partie venant en prise avec la surface cible (101) située pour perturber le matériau de la surface cible (101) et une région de sous-surface respective à proximité d'emplacements où les impressions (100) sont formées, et de préférence
dans lequel une hauteur des dents (960) est ajustable pour sélectionner une profondeur de pénétration dans le matériau de la surface cible (101), et éventuellement
dans lequel les dents (960) sont supportées par l'intermédiaire d'au moins un élément de sollicitation.
